# FASCICULE DE BREVET EUROPEEN

(11) **EP 0 462 907 B1**
(45) Date de publication et mention de la délivrance du brevet: **10.04.1996**
(21) Numéro de dépôt: 91401688.6
(22) Date de dépôt: 21.06.1991
(51) Int. Cl.: G02B 6/38

(54) **Connecteur pour fibres optiques à verrouillage et déverrouillage rapides**
Faseroptischer Stecker mit schneller Verriegelung und Entriegelung
Optical fibre connector with rapid locking and unlocking

(30) Priorité: 21.06.1990 FR 9007793
(43) Date de publication de la demande: 27.12.1991
(73) Titulaire: RADIALL Société anonyme dite:, F-93116 Rosny sous Bois (FR)
(72) Inventeur: Grassin D'Alphonse, Emmanuel, F-75015 - Paris (FR); Dubois, Serge, F-93270 - Sevran (FR); Valade, Norbert, F-93150 - Le Blanc Mesnil (FR)
(74) Mandataire: Leszczynski, André

(56) Documents cités:
- EP-A- 0 063 085
- EP-A- 0 156 397
- EP-A- 0 195 432
- EP-A- 0 338 727
- PATENT ABSTRACTS OF JAPAN, vol. 13, no. 162 (P-859)[3510], 19 avril 1989 & JP-A-64 506
- USA4762389
- USA4762388
- USA4726647

## Description

La présente invention est relative à un connecteur pour fibres optiques comportant deux embouts montés à l'extrémité de chacune des fibres à connecter, un raccord femelle de reconstitution comportant un perçage longitudinal pour supporter et aligner les deux embouts face à face, chacun des embouts étant logé dans un corps de fiche fixé au câble optique comportant la fibre optique à connecter, chacun des corps de fiche et le raccord comportant des moyens de verrouillage à encliquetage coopérants pour immobiliser axialement le corps de fiche sur le raccord, et un capot de manoeuvre monté autour de chacun des corps de fiche et agencé pour provoquer, par un déplacement axial en direction du raccord, un engagement des moyens de verrouillage coopérants du corps de fiche et du raccord, et pour provoquer, par un déplacement axial en sens opposé, un dégagement desdits moyens de verrouillage coopérants et une séparation du corps de fiche par rapport au raccord. Un tel connecteur est décrit dans US-A-4 726 647.

Les connecteurs pour fibres optiques à verrouillage et déverrouillage rapides de ce type dit "push-pull" tels que ceux commercialisés par la Société NIPPON TELEGRAPH AND TELEPHONE COMPANY sous la référence SC sont d'un maniement très simple une fois que le corps de fiche logeant l'embout est monté et fixé sur le câble contenant la fibre optique, puisque les manoeuvres de connexion et de déconnexion par rapport au raccord s'effectuent par de simples mouvements de poussée et de traction du capot de manoeuvre.

Par contre ces connecteurs connus présentent d'importants inconvénients pour l'utilisateur dans l'étape de montage du corps de fiche et de l'embout sur le câble à fibre optique, en particulier, du fait d'un grand nombre de composants à manipuler en vue de leur assemblage.

Ainsi, la structure du raccord, du corps de fiche, et du capot de manoeuvre, en particulier du fait de la disposition des moyens de verrouillage coopérants et des portées de guidage de ces composants les uns par rapport aux autres, est telle qu'à l'état assemblé, le capot de guidage recouvre la partie arrière du corps de fiche par laquelle celui-ci doit être fixé par sertissage au câble à fibre optique, de telle sorte que le capot de manoeuvre ne peut être mis en place sur le corps de fiche que lorsque la fixation de celui-ci au câble à fibre optique a été réalisée. En conséquence, dans la pratique, l'utilisateur devant procéder au montage du corps de fiche et de l'embout sur le câble à fibre optique, dispose d'un corps de fiche et d'un capot de manoeuvre séparés, et ne peut mettre en place le capot de manoeuvre sur le corps de fiche qu'une fois celui-ci fixé au câble.

De plus, la structure de l'embout et du corps de fiche des connecteurs connus rend relativement délicate l'opération de mise en place de l'embout à l'extrémité duquel a été introduite et immobilisée par collage l'extrémité de la fibre optique, compte tenu en particulier de la nécessité d'interposer un ressort de compression prenant appui sur des portées du corps de fiche et de l'embout pour repousser élastiquement ce dernier en direction du centre du raccord, et l'isoler ainsi de toute sollicitation mécanique sur le corps de fiche.

La présente invention se propose de réaliser un connecteur pour fibres optiques, à verrouillage et déverrouillage rapides, particulièrement facile à mettre en oeuvre par l'utilisateur, notamment lors de la phase de montage du corps de fiche sur le câble à fibre optique, et ce du fait d'un nombre particulièrement réduit de pièces à assembler et de caractéristiques de structure permettant un assemblage particulièrement simple et rapide de ces pièces.

Le connecteur selon la présente invention se caractérise essentiellement par le fait que le raccord femelle de reconstitution comporte une pièce tubulaire axiale dont la surface extérieure constitue une portée de guidage mécanique du corps de fiche et dont au moins une partie de la surface intérieure sert de portée de guidage mécanique de l'embout dans le raccord.

Dans un mode de réalisation de l'invention le corps de fiche et le raccord femelle de reconstitution comportent des portées de guidage mécaniques continues en appui mutuel, lesdites portées s'étendant sur le corps de fiche et respectivement sur le raccord au-delà des moyens de verrouillage coopérants respectivement prévus sur ces éléments.

Dans un second mode de réalisation de l'invention, le corps de fiche et le raccord femelle de reconstitution comportent deux portées de guidage mécanique, en regard mutuel avec un faible jeu, disposées aux extrémités du corps de fiche et respectivement du raccord, de part et d'autre des moyens de verrouillage coopérants respectivement prévus sur ces éléments.

Contrairement aux connecteurs connus, on assure ainsi dans les deux modes de réalisation un guidage direct entre le corps de fiche et le raccord.

La pièce tubulaire présente de préférence une section non circulaire, notamment polygonale non régulière, correspondant à la section intérieure de la paroi du corps de fiche. En particulier, lesdites sections peuvent être carrées ou rectangulaires avec au moins un pan coupé assurant une fonction de détrompage mécanique.

Selon une caractéristique particulière de l'invention, le corps de fiche comporte à sa partie arrière des moyens pour la fixation du corps de fiche à un câble à fibre optique, lesdits moyens étant accessibles en vue de la fixation même lorsque le capot de manoeuvre est monté autour dudit corps de fiche.

Les moyens permettant la connexion au câble à fibre optique sont de préférence constitués par un manchon tubulaire faisant saillie axialement de la face d'extrémité arrière du corps de fiche et autour duquel on immobilise, par sertissage d'une ferrule périphérique, l'armature et/ou la gaine extérieure du câble à fibre optique.

Pour garantir un bon positionnement pour l'assemblage du corps de fiche et du capot de manoeuvre monté sur lui, avec le raccord, l'on peut avantageusement munir le raccord et/ou le manchon de manoeuvre de repères visuels d'orientation.

Les moyens de verrouillage coopérants du corps de fiche et du raccord comportent avantageusement des languettes à extrémités en forme de harpon, à élasticité radiale, s'engageant pour le verrouillage dans des ouvertures de la paroi extérieure du raccord, le capot de manoeuvre étant agencé pour, lors d'un déplacement de recul, prendre appui sur les extrémités desdites languettes et les repousser vers l'intérieur en les dégageant des ouvertures de la paroi extérieure du raccord.

Dans un mode de réalisation particulier, l'embout destiné à recevoir l'extrémité de la fibre optique comporte à sa partie arrière des moyens de verrouillage à encliquetage à l'intérieur du corps de fiche. Le corps de fiche comporte en outre avantageusement intérieurement un manchon annulaire de réception d'un ressort de compression qui prend appui, d'une part à la base du manchon, et d'autre part contre une paroi de fond d'un évidement d'extrémité de l'embout.

La longueur du manchon annulaire est de préférence suffisamment grande pour guider le ressort de compression. De plus la base du manchon se reliant au corps de fiche et l'extrémité du ressort sont agencés pour que le ressort de compression reste fixé sur le manchon, de sorte que, en l'absence de l'embout, et contrairement à ce qui est le cas avec les connecteurs connus, le ressort peut ne plus être livré à l'utilisateur sous forme de pièce séparée.

Grâce aux caractéristiques de l'invention, il est possible de disposer d'un ensemble unitaire constitué du corps de fiche, du capot de déverrouillage et du ressort de compression.

Les différents composants du connecteur selon l'invention peuvent avantageusement être réalisés de manière particulièrement économique en matière plastique.

Les composants métalliques peuvent être limités aux moyens utilisés pour positionner précisément les fibres optiques en regard dans le raccord.

Ces moyens peuvent être de différents types et en particulier du type décrit par la société déposante dans EP-A-0063085 et dans lequel le raccord femelle comporte, dans sa partie centrale, à l'intérieur de son perçage longitudinal, un corps de butée pour les embouts mâles, notamment une sphère, présentant un orifice axial traversant et autour de celui-ci une portée de contact en regard de chacun des embouts mâles qui, pour leur part, présentent une protubérance tubulaire axiale susceptible de s'engager dans l'orifice du corps de butée et un conduit dans lequel la fibre optique peut être introduite à jeu et immobilisée de manière que son extrémité coïncide avec l'extrémité de la protubérance. Chacun des embouts comporte en outre, en retrait de la protubérance et entourant la partie arrière de celle-ci, un évidement annulaire dont la paroi, de préférence de profil conique, définit une portée de contact avec la portée en regard du corps de butée du raccord femelle sous l'action d'un moyen d'appui longitudinal tel qu'un ressort de compression. Les portées en regard du corps de butée des embouts mâles sont agencées de façon telle que lors de tout mouvement relatif des portées en contact l'extrémité d'une fibre, au niveau de la face d'extrémité de la protubérance d'un embout mâle, soit maintenue à une distance constante prédéterminée du centre du corps de butée.

Selon l'invention, seuls le corps de butée du raccord et la partie d'extrémité de l'embout comportant la protubérance tubulaire et les portées de contact avec le corps de butée doivent être en un matériau dur tel qu'un métal, une céramique ou certaines matières plastiques, le reste de l'embout et les autres composants du connecteur pouvant alors être en matière plastique.

D'autres avantages et caractéristiques de l'invention apparaîtront à la lecture de la description suivante d'un exemple de réalisation nullement limitatif en se référant au dessin annexé dans lequel :
- la figure 1 est une vue schématique partiellement en coupe d'un connecteur selon l'invention,
- la figure 1A est vue en coupe fragmentaire illustrant une variante de réalisation du corps de fiche et du raccord femelle de reconstitution d'un connecteur selon l'invention.
- la figure 2 est une vue en coupe selon II-II de la figure 1,
- la figure 3 représente en perspective un connecteur selon l'invention à l'état déconnecté,
- la figure 4 est une vue en élévation partiellement en coupe d'un raccord femelle de reconstitution du connecteur de la figure 1, et
- la figure 5 est une vue dans le sens de la flèche F de la figure 4.

En se référant au dessin, on voit que le connecteur selon l'invention comporte à titre de composants principaux un raccord femelle de reconstitution désigné globalement par 1, deux corps de fiche désignés globalement par 2 sur chacun desquels est mis en place un capot de manoeuvre ou dévétisseur 3 et à l'intérieur desquels sont logés des embouts désignés globalement par 4.

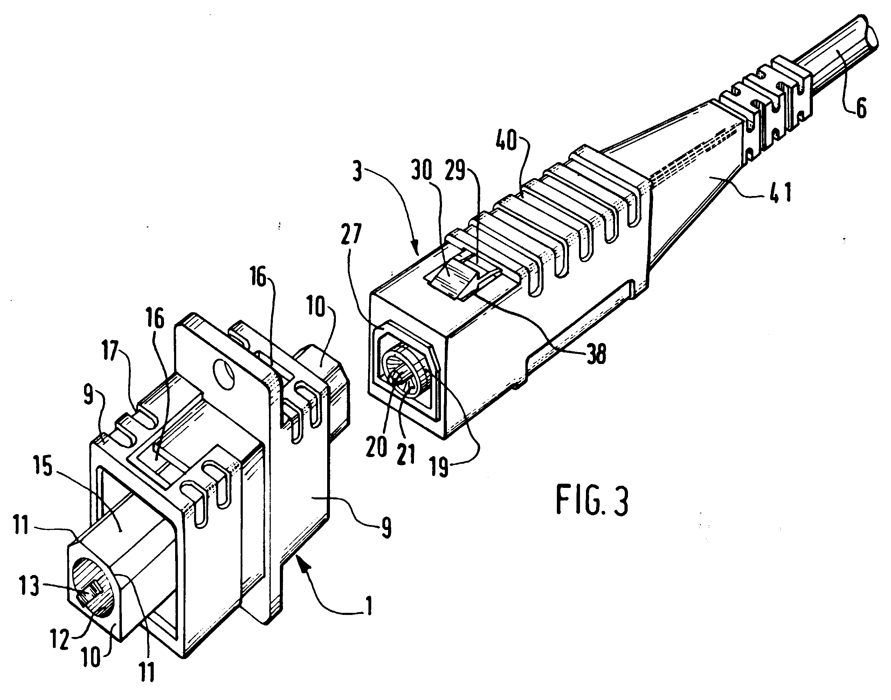

Le connecteur selon l'invention est destiné au raccordement de fibres optiques 5 contenues dans un câble optique monofibre comportant une gaine extérieure 6 (figure 3), une armature de renforcement 7 et une gaine intérieure 8 entourant la fibre 5.

Le connecteur selon l'invention peut être mis en oeuvre aussi bien avec des fibres optiques monomode qu'avec des fibres optiques multimode.

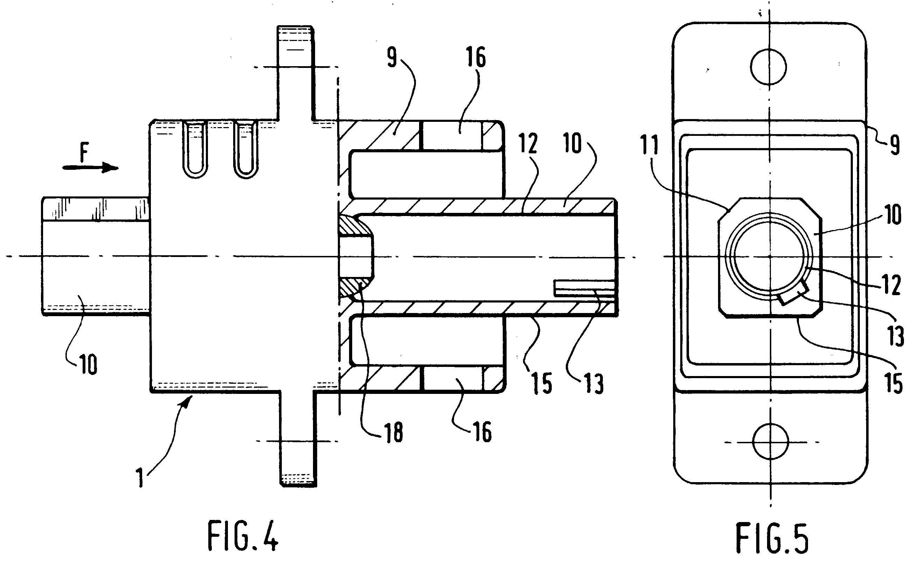

Le raccord femelle 1 comporte une paroi extérieure 9, de forme sensiblement rectangulaire dans l'exemple illustré, et deux pièces tubulaires 10 de section rectangulaire avec deux pans coupés 11, chacune des pièces tubulaires 10 s'étendant axialement comme on le voit le mieux sur les figures 3 et 4 au-delà des faces frontales de la paroi extérieure 9 du raccord.

La surface intérieure 12 des pièces tubulaires 10 est de section circulaire et comporte au voisinage de son extrémité une rainure 13 dans laquelle s'engage une nervure formant clavette 14 de l'embout 4 pour déterminer l'orientation angulaire de l'embout 4 par rapport au raccord.

La surface extérieure 15 des pièces tubulaires 10, du fait des pans coupés 11 présente la forme d'un hexagone non régulier.

La paroi extérieure 9 du raccord comporte, dans deux faces opposées, des ouvertures 16 constituant les moyens de verrouillage prévus sur le raccord pour coopérer avec des moyens de verrouillage du corps de fiche comme cela sera expliqué plus loin.

Le raccord comporte en outre à sa partie supérieure des repères visuels d'orientation sous forme d'encoches 17.

Le raccord comporte intérieurement une sphère 18 munie d'un perçage longitudinal et utilisée pour le positionnement mutuel des extrémités des fibres optiques 5 immobilisées chacune dans un embout 4 et plus précisément dans une pièce d'extrémité 19 de l'embout présentant une protubérance d'extrémité 20 et un évidement annulaire 21 de profil conique.

Pour une description détaillée de tels moyens de positionnement de fibres optiques en regard, on peut se référer au brevet EP-A-0 0063085 de la société déposante.

L'embout 4, outre la pièce de positionnement de fibre optique 19 montée à l'avant, comporte à sa partie arrière un évidement 22 logeant un ressort de compression 23 et autour dudit évidement 22 des pattes élastiques 24 d'encliquetage dans une cavité 25 du corps de fiche 2 réalisée au voisinage de son fond 26.

L'embout 4 est ainsi retenu dans le corps de fiche avec une possibilité de déplacement axial limité.

Chaque corps de fiche 2 présente à l'avant une paroi 27 présentant la même section que la section de la surface extérieure 15 des pièces tubulaires 10 du raccord 1, la paroi 27 comportant une surface intérieure 28 constituant une portée d'appui de guidage sur la portée extérieure 15.

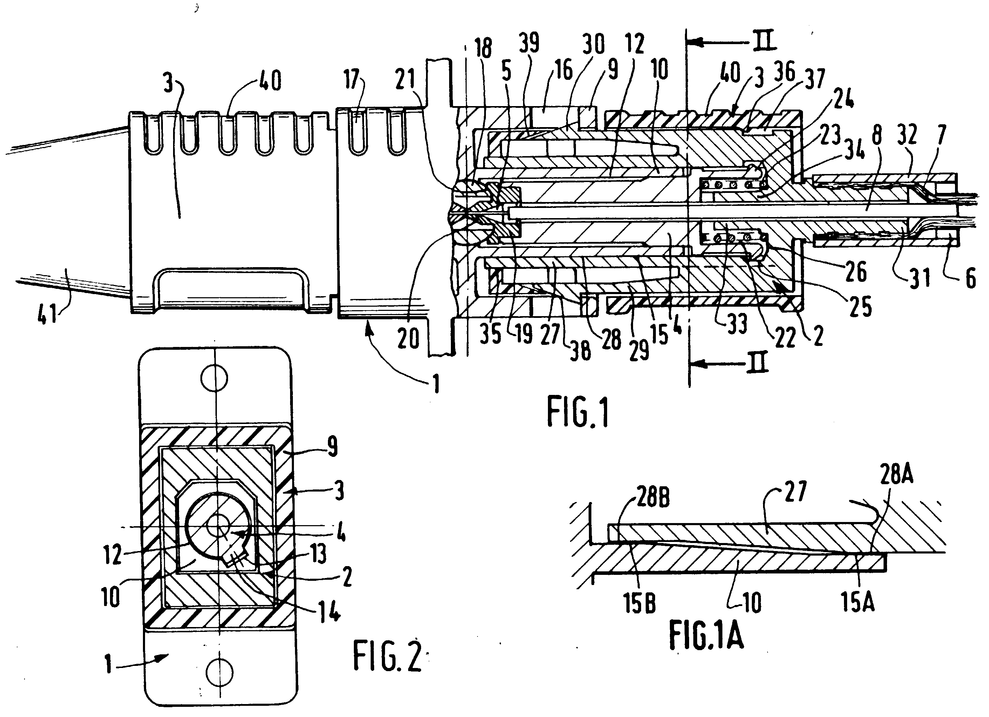

Dans la variante illustrée à la figure 1A, les pièces tubulaires 10 du raccord 1 et la paroi 27 du corps de fiche 2 comportent respectivement à leurs extrémités deux portées de guidage mécanique disposées en regard mutuel avec un faible jeu 15A, 28A et respectivement 15B, 28B.

Pour le verrouillage par rapport au raccord, chaque corps de fiche 2 comporte des languettes 29 à élasticité radiale présentant une extrémité conformée en harpon 30 venant s'encliqueter dans les ouvertures 16 du raccord comme on le voit sur la figure 1.

A sa partie arrière, le corps de fiche 2 comporte, sous la forme d'un prolongement d'un seul tenant, une partie tubulaire ou manchon 31 présentant une surface extérieure crantée pour réaliser l'immobilisation du corps de fiche sur le câble par sertissage d'une ferrule 32. Dans l'exemple illustré, l'immobilisation du câble s'effectue dans une zone où la gaine externe a été retirée de manière à immobiliser lors du sertissage l'armature 7 du câble entre le manchon 31 et la ferrule 32.

Le corps de fiche comporte en outre intérieurement une saillie en forme de manchon annulaire 33 autour de laquelle vient s'engager le ressort 23 pour être retenu à son extrémité sur la base 34 de la saillie 33.

Le connecteur selon l'invention comporte enfin pour chacun des corps de fiche 2, un capot de manoeuvre 3 pour la préhension du corps de fiche en vue de son déplacement en direction du raccord pour le verrouillage et à l'écart du raccord pour le déverrouillage.

Chaque capot de manoeuvre comporte une partie d'extrémité tubulaire 35 de section intérieure correspondant à la section extérieure de la paroi 27 du corps de fiche et assurant le guidage longitudinal du capot par rapport au corps de fiche.

Le mouvement longitudinal du capot par rapport au corps de fiche est limité par une saillie 36 du capot engagée dans un évidement 37 de longueur limitée sur le corps de fiche. La coopération de cette saillie 36 et de l'évidement 37 assure également la retenue du capot sur le corps de fiche, les deux pièces pouvant être préassemblées et ainsi livrées à l'utilisateur sous la forme d'un ensemble unitaire.

Chaque capot de manoeuvre 3 présente au voisinage de sa partie avant des évidements 38 définis par une paroi avant inclinée 39 de forme correspondant à celle du flanc incliné de l'extrémité en harpon 30 des languettes 29 du corps de fiche de manière que, lors d'une traction vers l'arrière du capot, la surface 39 vienne glisser le long du flanc incliné des parties en harpon 30, les repoussant vers l'intérieur ce qui permet de dégager le corps de fiche du raccord en vue du déverrouillage.

Chaque capot de manoeuvre comporte par ailleurs des repères visuels d'orientation sous la forme d'encoches 40 similaires aux encoches 17 prévues sur la face du raccord devant être alignée avec la face du capot, en vue d'obtenir la disposition relative voulue du corps de fiche et du raccord permettant au corps de fiche d'être engagé dans le raccord.

On voit enfin sur le dessin des manchons de guidage 41 du câble à fibre optique (dont l'un est omis sur la partie de droite en coupe de la figure 1).

Compte-tenu de la structure du connecteur décrite ci-dessus, la mise en oeuvre s'effectue de la manière suivante.

On dénude tout d'abord l'extrémité d'un câble à fibre optique de manière à mettre à nu sur des tronçons successifs une longueur de fibre, une longueur de revêtement intérieur, et une longueur d'armature de renforcement.

On sélectionne l'embout approprié au diamètre extérieur de la fibre, on l'enduit intérieurement de résine et on le fixe par encliquetage dans un corps de fiche faisant lui-même partie d'un ensemble corps de fiche/capot de manoeuvre/ressort.

On enfile sur le câble optique une douille de sertissage, puis l'ensemble embout, corps de fiche, capot de manoeuvre, ressort ; on procède au sertissage, on laisse durcir la résine et enfin l'on polit l'extrémité de la fibre.

L'opération est répétée pour la deuxième fibre optique à raccorder et les deux câbles munis chacun d'un embout, d'un corps de fiche et d'un capot de manoeuvre peuvent être mis en place sur un raccord, le corps de fiche venant s'encliqueter dans le raccord comme expliqué ci-dessus.

En vue du déverrouillage, il suffit d'exercer une traction vers l'arrière sur le capot de manoeuvre correspondant à la fibre à déconnecter pour réaliser le déverrouillage du corps de fiche d'avec le raccord ce qui permet l'extraction de l'ensemble corps de fiche, capot de manoeuvre, embout et câble correspondant.

Bien que l'invention ait été décrite en liaison avec un mode de réalisation particulier, il est bien évident qu'elle n'y est nullement limitée et qu'on peut lui apporter différentes variantes et modifications sans sortir de son cadre.

## Revendications

1. Connecteur pour fibres optiques comportant deux embouts (4) montés à l'extrémité de chacune des fibres (5) à connecter, un raccord femelle de reconstitution (1) comportant un perçage longitudinal pour supporter et aligner les deux embouts face à face, chacun des embouts étant logé dans un corps de fiche (2) fixé au câble optique comportant la fibre optique à connecter, chacun des corps de fiche et le raccord comportant des moyens de verrouillage à encliquetage coopérants (30,16) pour immobiliser axialement le corps de fiche sur le raccord et un capot de manoeuvre (3) monté autour de chacun des corps de fiche et agencé pour provoquer, par un déplacement axial en direction du raccord, un engagement des moyens de verrouillage coopérants du corps de fiche et du raccord et pour provoquer, par un déplacement axial en sens opposé, un dégagement desdits moyens de verrouillage coopérants et une séparation du corps de fiche par rapport au raccord, ledit raccord femelle de reconstitution (1) contenant une pièce tubulaire axiale (10) dont au moins une partie de la surface intérieure sert de portée de guidage mécanique de l'embout (4) dans le raccord (1), caractérisé par le fait que ladite pièce tubulaire (10) s'étend axialement au-delà de la paroi extérieure (9) du raccord (1), la surface extérieure (15) de ladite pièce tubulaire (10) coopérant avec la surface intérieure (28) d'une paroi (27) de section correspondante, du corps de fiche (2) pour assurer un guidage mécanique du corps de fiche dans le raccord.

2. Connecteur selon la revendication 1, caractérisé par le fait que ladite surface intérieure du corps de fiche (2) et ladite surface extérieure du raccord femelle de reconstitution (1) constituent des portées de guidage mécanique (28,15) continues, en appui mutuel s'étendant sur le corps de fiche, et respectivement sur le raccord, au-delà des moyens de verrouillage coopérants (30,16) respectivement prévus sur ces éléments.

3. Connecteur selon la revendication 1, caractérisé par le fait que ladite surface intérieure du corps de fiche (2) et ladite surface extérieure du raccord femelle de reconstitution (1) comportent deux portées de guidage mécanique (28A,28B;15A,15B) en regard mutuel avec un faible jeu, disposées aux extrémités de la paroi (27) du corps de fiche (2) et respectivement du raccord (1) de part et d'autre des moyens de verrouillage coopérants (30,16) respectivement prévus sur ces éléments.

4. Connecteur selon l'une quelconque des revendications 1 à 3, caractérisé par le fait que la surface extérieure (15) de ladite pièce tubulaire (10) et la surface intérieure (28) de la paroi (27) du corps de fiche présentent une section non circulaire, notamment polygonale non régulière.

5. Connecteur selon l'une quelconque des revendications précédentes, caractérisé par le fait que le corps de fiche (2) comporte à sa partie arrière des moyens (31) pour la fixation du corps de fiche à un câble à fibre optique (5), lesdites moyens étant accessibles en vue de la fixation même lorsque le capot de manoeuvre (3) est monté autour dudit corps de fiche (2).

6. Connecteur selon la revendication 5, caractérisé par le fait que lesdits moyens (31) pour la fixation sont constitués par un manchon tubulaire (31) faisant saillie axialement de la face d'extrémité arrière du corps de fiche (2) et autour duquel, on immobilise, par sertissage d'une ferrule périphérique (32) l'armature (7) et/ou la gaine extérieure (6) du câble à fibre optique.

7. Connecteur selon l'une quelconque des revendications précédentes, caractérisé par le fait que les moyens de verrouillage coopérants du corps de fiche et du raccord comportent des languettes (29) à extrémité en forme de harpon (30), à élasticité radiale, s'engageant pour le verrouillage dans des ouvertures (16) de la paroi extérieure (9) du raccord, le capot de manoeuvre (3) étant agencé pour, lors d'un déplacement de recul prendre appui sur les extrémités desdites languettes et les repousser vers l'intérieur en les dégageant des ouvertures de la paroi extérieure du raccord.

8. Connecteur selon l'une quelconque des revendications précédentes, caractérisé par le fait que l'embout (4) comporte à sa partie arrière des moyens de verrouillage à encliquetage (24) à l'intérieur du corps de fiche.

9. Connecteur selon l'une quelconque des revendications précédentes, caractérisé par le fait que le corps de fiche (2) comprend intérieurement un manchon annulaire (33) autour duquel est mis en place un ressort de compression (23) qui prend appui d'une part à la base (34) du manchon et d'autre part, contre une paroi de fond d'un évidement (22) d'extrémité de l'embout (4).

10. Connecteur selon la revendication 9, caractérisé par le fait que le ressort de compression (23) est monté sur ledit manchon (33) de manière à être solidaire du corps de fiche (2).

11. Connecteur selon l'une quelconque des revendications précédentes, caractérisé par le fait que le raccord (1) et le capot de manoeuvre (3) comportent des repères visuels d'orientation mutuelle (17,40).

## Patentansprüche

1. Verbinder für optische Faser mit zwei Steckern (4), die an den Enden jeder der zu verbindenden Fasern (5) befestigt sind, einer Verbindungsbuchse (1) mit einem Durchlaß in Längsrichtung zur Abstützung und Ausrichtung der beiden Stecker in gegenüberliegender Stellung, wobei jeder Stecker in einem Steckerkörper (2) liegt, der an dem optischen Kabel befestigt ist, das die zu verbindende optische Faser enthält, wobei die Steckerkörper und die Verbindungsbuchse zusammenwirkende Rastverriegelungseinrichtungen (30,16) zur axialen Festlegung des Steckerkörpers an der Verbindungsbuchse sowie eine Griffkappe (3) umfassen, die um jeden der Steckerkörper herum angebracht und dazu vorgesehen ist, daß durch axiale Verschiebung in Verbindungsrichtung ein Eingriff der zusammenwirkenden Verriegelungseinrichtungen des Steckerkörpers und der Verbindungsbuchse und durch axiale Verschiebung in entgegengesetzte Richtung eine Trennung der zusammenwirkenden Verriegelungseinrichtungen und eine Trennung des Steckerkörpers in bezug auf die Buchse bewirkt wird, welche Verbindungsbuchse (1) einen axialen Rohrabschnitt (10) umfaßt, der wenigstens mit einem Teil seiner inneren Oberfläche als mechanische Führung des Steckers (4) in der Verbindungsbuchse (1) dient, dadurch **gekennzeichnet,** daß der Rohrabschnitt (10) sich in Axialrichtung über die äußere Wand (9) der Verbindungsbuchse (1) hinaus erstreckt, daß die äußere Oberfläche (15) des Rohrabschnitts (10) mit der inneren Oberfläche (28) einer Wand (27) mit entsprechendem Querschnitt des Steckerkörpers (2) zusammenwirkt zur Sicherung einer mechanischen Führung des Steckerkörpers in der Verbindungsbuchse.

2. Verbinder nach Anspruch 1, dadurch **gekennzeichnet,** daß die innere Oberfläche des Steckerkörpers (2) und die äußere Oberfläche der Verbindungsbuchse (1) mechanische, fortgesetzte Führungen (28,50) bilden, die sich bei gegenseitiger Anlage am Steckerkörper und an der Verbindungsbuchse über die Verriegelungseinrichtungen (30,16), die an diesen Elementen ausgebildet sind, hinaus erstrecken.

3. Verbinder nach Anspruch 1, dadurch **gekennzeichnet,** daß die innere Oberfläche des Steckerkörpers (2) und die äußere Oberfläche der Verbindungsbuchse (1) zwei mechanische Führungsflächen (28a,28b;15A,15B) zueinander mit leichtem Spiel aufweisen, die an den Enden der Wand (27) des Steckerkörpers (2) bzw. der Verbindungsbuchse (1) auf beiden Seiten der zusammenwirkenden Verriegelungseinrichtungen (30,16) ausgebildet sind, die an diesen Elementen ausgebildet sind.

4. Verbinder nach einem der Ansprüche 1 bis 3, dadurch **gekennzeichnet,** daß die äußere Oberfläche (15) des Rohrabschnitts (10) und die innere Oberfläche (28) der Wand (27) des Steckerkörpers einen nicht-kreisförmigen Querschnitt, insbesondere einen unregelmäßig-polygonalen Querschnitt aufweisen.

5. Verbinder nach einem der vorhergehenden Ansprüche, dadurch **gekennzeichnet,** daß der Steckerkörper (2) in seinem rückwärtigen Bereich Einrichtungen (31) zur Befestigung des Steckerkörpers an einem Kabel mit optischer Faser (5) aufweist, welche Einrichtungen für die Befestigung selbst dann zugänglich sind, wenn die Griffkappe (3) um den Steckerkörper (2) herum angebracht ist.

6. Verbinder nach Anspruch 5, dadurch **gekennzeichnet,** daß die Einrichtungen (31) zur Befestigung gebildet werden durch eine rohrförmige Muffe (31), die axial von der rückwärtigen Endfläche des Steckerkörpers (2) vorspringt und um die herum der Mantel (7) und/oder die äußere Hülle (6) des Kabels mit optischer Faser festgelegt wird.

7. Verbinder nach einem der vorhergehenden Ansprüche, dadurch **gekennzeichnet,** daß die Verriegelungseinrichtungen des Steckerkörpers und der Buchse Zungen (29) mit Enden in Form von Haken (30) mit axialer Elastizität aufweisen, die zur Verriegelung in Öffnungen (16) der äußeren Wand (9) der Buchse eingreifen, wobei, wenn die Griffkappe (3) bei der Rückzugsbewegung betätigt wird, die Kappe gegen die Enden der Zungen anliegt und diese nach innen unter Austritt aus den Öffnungen der äußeren Wand der Buchse zusammendrückt.

8. Verbinder nach einem der vorhergehenden Ansprüche, dadurch **gekennzeichnet,** daß der Stecker (4) in seinem rückwärtigen Bereich einrastende Verriegelungseinrichtungen (24) zur Verriegelung im Inneren des Steckerkörpers aufweist.

9. Verbinder nach einem der vorhergehenden Ansprüche, dadurch **gekennzeichnet,** daß der Steckerkörper (2) im Inneren eine ringförmige Muffe (33) aufweist, um die herum eine Druckfeder (23) angeordnet ist, die andererseits gegen eine Basis (34) der Muffe und andererseits gegen eine Wand des Bodens einer Ausnehmung (22) am Ende des Steckers (4) anliegt.

10. Verbinder nach Anspruch 9, dadurch **gekennzeichnet,** daß die Druckfeder (23) auf der Muffe (33) derart angeordnet ist, daß sie mit dem Steckerkörper (2) fest verbunden ist.

11. Verbinder nach einem der vorhergehenden Ansprüche, dadurch **gekennzeichnet,** daß die Buchse (1) und die Griffkappe (3) sichtbare Markierungen (17,40) zur gegenseitigen Orientierung aufweisen.

## Claims

1. Connector for optical fibres comprising two terminals (4) mounted at the end of each of the fibres (5) to be connected, a female connecting joint (1) comprising a longitudinal bore to support and align the two terminals end to end, each of the terminals being housed in a plug body (2) attached to the optical cable containing the optical fibres to be connected, each of the plug bodies and the joint comprising co-operating catch locking means (30, 16) for axial immobilisation of the plug body on the joint and a manoeuvring cover (3) mounted around each plug body and arranged to cause, by axial displacement in the direction of the joint, engagement of the co-operating locking means of the plug body and joint, and by axial displacement in the opposite direction, release of the said co-operating locking means and separation of the plug body in relation to the joint, the said female connecting joint (1) containing an axial tubular piece (10), of which at least part of the inner surface acts as a mechanical guide surface for the terminal (4) in the joint (1), characterised in that the said tubular piece (10) extends axially beyond the outer wall (9) of the joint (1), the outer surface (15) of the said tubular piece (10) co-operating with the inner surface (28) of a wall (27) of corresponding section of the body of the plug (2) in order to ensure mechanical guiding of the plug body in the joint.

2. Connector according to claim 1, characterised in that the said inner surface of the plug body (2) and the said outer surface of the female connecting joint (1) constitute continuous mechanical guiding surfaces (28, 15) in mutual support extending over the plug body and the joint respectively beyond the co-operating locking means provided on these elements respectively (30, 16).

3. Connector according to claim 1 characterised in that the said inner surface of the plug body (2) and the said outer surface of the female connecting joint (1) comprise two mechanical guiding surfaces (28a, 28b, 15a, 15b) facing each other with a slight play, arranged at the ends of the wall (27) of the plug body (2) and the joint (1) respectively on either side of the co-operating locking means (30, 16) provided on these elements respectively.

4. Connector according to any of claims 1 to 3, characterised in that the outer surface (15) of the said tubular piece (10) and the inner surface (28) of the wall (27) of the plug body have a non-circular section, in particular an irregular polygonal shape.

5. Connector according to any of the previous claims characterised in that the plug body (2) comprises on its rear part means (31) for fixing the plug body to an optical fibre cable (5), the said means being accessible for fixing even when the manoeuvring cover (3) is mounted around the said plug body (2).

6. Connector according to claim 5, characterised in that the said means (31) for fixing consist of a tubular sleeve (31) projecting axially from the rear end of the plug body (2) and around which is immobilised, by clamping of a peripheral ferrule (32), the armouring (7) and/or outer sheath (6) of the optical fibre cable.

7. Connector according to any of the previous claims, characterised in that the co-operating locking means of the plug body and the joint comprise tongues (29) with an arrow-shaped end (30), with radial elasticity, engaging to lock in the openings (16) of the outer wall (9) of the joint, the manoeuvring cover (3) being arranged to rest during the backward movement on the ends of the said tongues and push these inwards, releasing them from the openings in the outer wall of the joint.

8. Connector according to any of the previous claims, characterised in that the terminal (4) comprises on its rear part locking means (24) for catching inside the plug body.

9. Connector according to any of the previous claims, characterised in that the plug body (2) comprises on its inside an annular sleeve (33) around which is placed a compression spring (23) which rests firstly on the base (34) of the sleeve and secondly against a base wall of a recess (22) at the end of the terminal (4).

10. Connector according to claim 9, characterised in that the compression spring (23) is mounted on the said sleeve (33) so as to form a whole with the plug body (2).

11. Connector according to any of the previous claims, characterised in that the joint (1) and the manoeuvring cover (3) comprise visual markings for mutual orientation (17, 40).
